Europäisches Patentamt

European Patent Office

Office européen des brevets

(11) Veröffentlichungsnummer: **0 315 733**

**A1**

(12) **EUROPÄISCHE PATENTANMELDUNG**

(21) Anmeldenummer: **88110192.7**

(22) Anmeldetag: **12.11.85**

(51) Int. Cl.4: **G03B 23/02**

(30) Priorität: **13.11.84 DE 3441464**

(43) Veröffentlichungstag der Anmeldung:
**17.05.89 Patentblatt 89/20**

(60) Veröffentlichungsnummer der früheren
Anmeldung nach Art. 76 EPÜ: **0 202 307**

(84) Benannte Vertragsstaaten:
**AT BE CH DE FR GB IT LI NL SE**

(71) Anmelder: **Licinvest AG**
**Hartbertstrasse 9**
**CH-7002 Chur(CH)**

(72) Erfinder: **Ackeret, Peter**
**Allmendstrasse 18**
**CH-8700 Küsnacht(CH)**

(74) Vertreter: **Dipl.-Ing. H. Marsch Dipl.-Ing. K.**
**Sparing Dipl.-Phys.Dr. W.H. Röhl**
**Patentanwälte**
**Rethelstrasse 123**
**D-4000 Düsseldorf 1(DE)**

(54) **Behälter zur Aufnahme eines Bilderstapels.**

(57) Die Erfindung betrifft einen Behälter für einen
Stapel von gleichformatigen, quadratischen oder
rechteckigen Bildern, mit einem Gehäuse (12), das
mit einem Sichtfenster (35) für das oberste Bild des
Stapels versehen ist, und mit einem parallel zum
Sichtfenster (35) aus dem Gehäuse (12) herausziehbaren und wieder einschiebbaren Schieber (14) zur
Aufnahme des Bilderstapels, wobei der Schieber
(14) mit einem Griffstück (48) versehen ist, an dem
sich ein Niederhalter (38) für den Stapel befindet,
der gegenüber dem Stapel in Richtung auf das Griffstück (48) vom Stapel zurückschiebbar angeordnet
ist, und wobei der Niederhalter (38) gegenüber dem
Griffstück (48) federvorgespannt geführt und an dem
Gehäuse (12) ein Anschlag (83) für den Niederhalter
(38) vorgesehen ist, der den Niederhalter (38) in
einer Zwischenstellung zwischen seinen beiden Endstellungen hält, in der der Niederhalter (38) gerade
über den Rand des Stapels greift.

FIG.1

## Behälter zur Aufnahme eines Bilderstapels

Die Erfindung betrifft einen Behälter zur Aufnahme eines Bilderstapels, das heißt eines Stapels rechteckiger gleichformatiger Bilder, wobei es sich vorzugsweise um Fotoabzüge handelt.

Derartige Behälter, als Bildwechsler zum zyklischen Umschichten der Bilder ausgebildet, sind in den US-PSen 4238898, 4238899, 4241528, 4241529, 4245417, 5259802 und 4376348 bekannt. Diese bekanten Behälter umfassen ein Gehäuse mit einem Sichtfenster, unter dem der Bilderstapel liegt und durch das möglichst der gesamte Bildbereich des dem Fenster zugekehrt liegenden Bildes sichtbar sein soll. Aus dem Gehäuse ist parallel zu der vom Fenster definierten Ebene ein Schieber herausziehbar und wieder einschiebbar, der den Bilderstapel aufnimmt. Bei jedem vollständigen Bewegungszyklus des Schiebers wird ein Bild an einer Stapelseite abgenommen, bleibt also im Gehäuse zurück, und an der andern Stapelseite wieder zugefügt. Probleme ergeben sich, wenn die Bilder Fotoabzüge sind, wegen der im allgemeinen gewölbten Form der Bilder, die --wenn man nicht besondere Meßnahmen trifft -- aus dem herausgezogenen Schieber "herausquellen". Aber auch ebene Bilder könnten aus dem Schieber herausfallen, wenn der Behälter etwa über Kopf geöffnet wird. Die im Stand der Technik vorgesehenen Maßnahmen, um ein solches Herausfallen oder -quellen zu vermeiden, sind am Schieber angebrachte Niederhalter, die die parallel zur Ausschubrichtung verlaufenden Kanten des Stapels oder auch die quer dazu verlaufenden Kanten übergreifen.

Um eine hinreichende Sicherheit zu gewährleisten, sind diese Niederhalter entsprechend breit. Sie decken damit die äußeren Flächenbereiche des Bildes ab, das im Sichtfenster möglichst vollständig exponiert sein soll. Vor allem gilt dies für den stirnseitigen Niederhalter, wenn dieser während einer Relativbewegung zwischen dem dem Fenster zugekehrten Bild und diesem selbst das Bild vom Fenster distanzieren soll, um ein Zerkratzen des Fensters auf seiner Innenseite zu verhüten, denn dann soll der Niederhalter ziemlich weit über die betreffende Bilderkante greifen.

Im Hinblick auf diese Problematik schlägt die Erfindung einen Behälter für einen Stapel von gleichformatigen, rechteckigen oder quadratischen Bildern mit einem Gehäuse vor, das mit einem an das Bildformat angepaßten Sichtfenster für das oberste Bild des Stapels versehen ist, und mit einem parallel zur Fensterebene aus dem Gehäuse herausziehbaren und wiedereinschiebbaren Schieber zur Entnahme mindestens eines Bildes aus dem Gehäuse, welcher Schieber im Bereich seiner Stirnwand einen beweglichen Niederhalter aufweist, wobei der Niederhalter in eine ausgefahrene Position, in der er das mindestens eine Bild im ausgezogenen Schieber übergreift, federvorgespannt ist.

Der Niederhalter erfüllt also beim Herausziehen des Schiebers die oben beschriebenen Funktionen, das heißt, er sichert alle im Schieber aus dem Gehäuse heraustransportierten Bilder gegen Herausfallen, und er kann auch die Distanzierungsaufgabe erfüllen. Wird jedoch der Schieber in das Gehäuse eingeschoben, kann er aus dem Sichtbereich des Fensters wegbewegt werden, vorzugsweise durch Auslaufen auf einen Anschlag; dabei ist es bevorzugt, daß er in dieser verlagerten Position den Bilderstapel gerade noch übergreift. Zusätuzlich oder alternativ können an das Gehäuse weitere Niederhalter angeformt sein, die auf dieselbe Kante des Bilderstapels wirken und die Distanzierungsaufgabe (mit) übernehmen.

Die erfindungsgemäße Ausbildung ist ebensowohl bei Bildwechslern wie auch bei Behältern ohne solche Wechselfunktion anwendbar.

Bevorzugte Ausführungsformen der Erfindung sind in den Unteransprüchen definiert und werden im Detail unter Bezugnahme auf die beigefügten Zeichnungen nachstehend erläutert.

Fig. 1 zeigt in Draufsicht und teilweise aufgeschnitten einen als Bildwechsler ausgebildeten Behälter gemäß der Erfindung, wobei der Schieber um einem Teilhub herausgezogen dargestellt ist.

Fig. 2 bis 10 zeigen Schnitte und Einzelheiten des Bildwechslers von Fig. 1.

Fig. 11 zeigt eine weitere Ausführungsform eines Bildwechslers in Draufsicht und teilweise aufgeschnitten mit ausgezogenem Schieber auf einer Hälfte der Figur.

Fig. 12 bis 15 zeigen Schnitte und Einzelheiten des Bildwechslers von Fig. 11.

Fig. 16 bis 18 zeigen im einzelnen die Wirkungsweise des Niederhalters der Ausführungsform der Fig. 1 bis 10.

Fig. 19 und 20 zeigen eine weitere Ausführungsform eines Niederhalters.

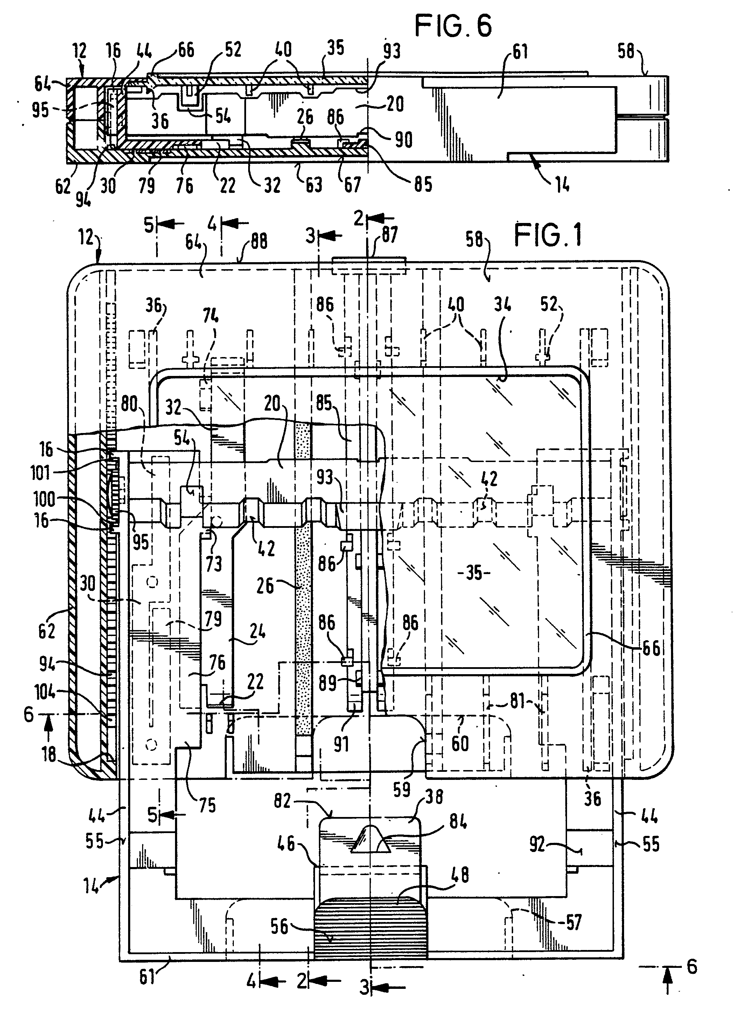

Der in Fig. 1 bis 10 dargestellte Bildwechsler umfaßt als erstes Rahmentiel ein Gehäuse 12 und als zweites Rahmenteil einen Schieber 14 zur Aufnahme eines Bilderstapels, wobei der Schieber 14 aus dem Gehäuse 12 um einen durch Anschläge 16 am Schieber und Gegenanschläge 18 am Gehäuse begrenzten Hub herausziehbar und wieder einschiebbar ist. Die Trenneinrichtung wird von einem Separatorsteg 20 gebildet. Die Zufuhreinrichtung wird von Haken 22 verkörpert, die an Blattfederarmen 24 sitzen. Die Halteeinrichtung zum Halten des Reststapels im Schieber wird ebenfalls von dem Separatorsteg gebildet, während das abgetrennte Einzelbild im Gehäuse durch das Zusammenwirken von im Gehäuse stationär angeordneten, mit einem Haftbelag 26 versehenen Schienen mit das Einzelbild gegen sie klemmenden, durch den Kontakt mit diesen zum Umlauf angetriebenen Rollen 28 gehalten wird. Schließlich wird die Leiteinrichtung durch Paare von Blattfedern 30 sowie mit den Federarmen 24 einstückig ausgebildete Federarme 32 verkörpert.

Die Federarme 24 und 32 drücken im eingeschobenen Zustand des Schiebers 14 den Bilderstapel (in Fig. 1 nicht gezeigt) gegen ein Sichtfenster, dessen innere Kontur mit 34 bezeichnet ist. Das dann im Stapel oberste Bild, ein Fotoabzug, soll dann möglichst plan liegen; zu diesem Zweck ist es an seinem Umfang in einer Ebene abgestützt, die definiert ist durch seitliche Rippen 36, die Unterseite eines Griffstück-Schiebeteils 38 und auf der ihm gegenüberliegenden Seite durch an das Gehäuse angeformte Rippen 40.

Fig. 1 zeigt die teilausgezogene Position des Schiebers 14. Im eingeschobenen Zustand liegt der Separatorsteg jenseits dieser Rippen 40; da er aber weiter zum Fenster 35 vorsteht, das dem Niveau dieser Rippen entspricht, weist er für den Passieren derselben Einschnitte 42 auf.

Die Abstützung der Kanten des Stapels erfolgt seitlich (d.h. parallel zur Auszugsrichtung) durch Holme 44 des Schiebers. Frontseitig, das heißt auf der Seite des Schiebers, die beim Auszug am weitesten vom Gehäuse entfernt ist, wird die Abstützung der Kanten durch die Anschlagfläche 46 eines mittig angeordneten Griffstücks 48 sowie durch seitliche Anschlagflächen 50 am Schieber bewirkt. Am gegenüberliegenden Ende stützen sich die Kanten der Fotos an an dem Gehäuse angeformten Anschlägen 52 ab, für die der Separatorsteg ebenfalls Durchlaß-Ausnehmungen 54 aufweist, die jedoch wesentlich tiefer sind als die für die Rippen 40.

Die Rippe 36 reicht weiter in das Innere des Schiebers hinein, als dem Niveau entspricht, das von der Oberkante 55 der Schieberholme definiert ist, so daß die Fotos nicht seitlich nach außen über die Schieberholme gleiten können. Die entsprechende Wirkung tritt zwischen Separatorsteg einerseits, Rippen 40 andererseits ein.

Das Griffstück 48 hat eine auf der Fensterseite des Gehäuses liegende Oberplatte 56 und eine Unterplatte 57, die breiter ist als die Oberplatte; die das Fenster rahmenartig umgebende Deckwand 58 des Gehäuses weist im Bereich der Oberplatte einen Ausschnitt 59 auf, während die gegenüberliegende Gehäusewandung für die Unterplatte 57 komplementär bei 60 eingetieft ist. Demgemäß hat die Vorrichtung im geschlossenen Zustand eine in sich geschlossene, im wesentlichen rechteckige Kontur ohne vorstehende Teile.

Das Gehäuse und der Schieber sind Kunststoff-Spritzteile. Der Schieber ist ein einteiliges Element, bestehend aus Holmen, Separatorsteg, Griffstück und einer das Griffstück mit den Holmen - die L-förmigen Querschnitt besitzen - verbindenden Stirnwand 61.

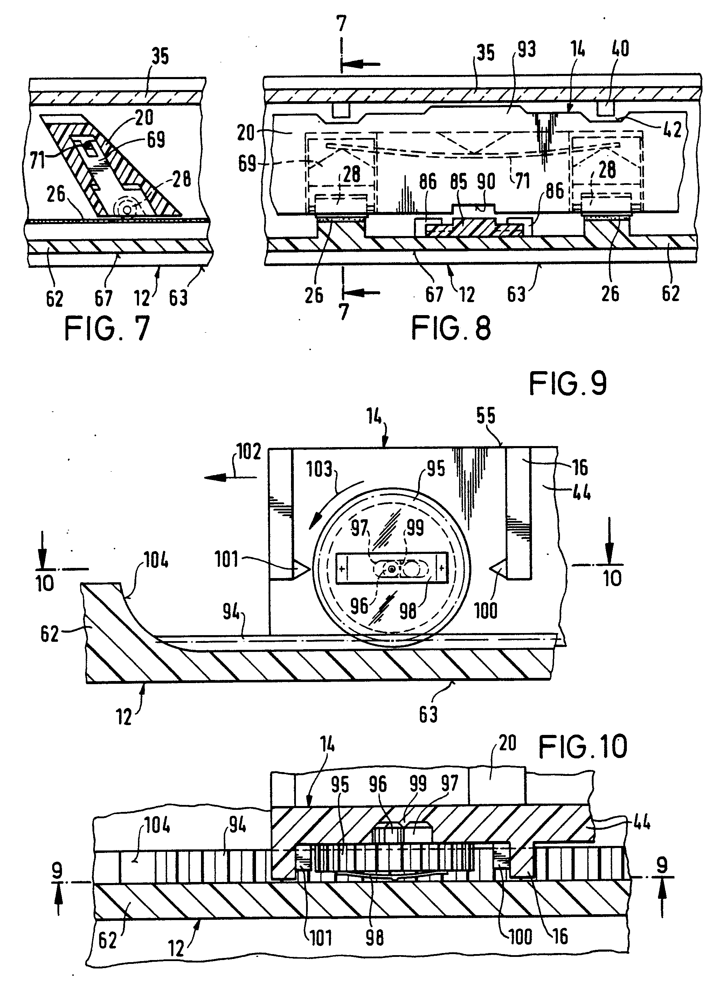

Das Gehäuse ist aus drei Teilen zusammengesetzt: Der Unterschale 62 mit Gehäuseboden 63, der rahmenartigen Oberschale 64 mit Fensterausschnitt, und dem in dieses eingesetzten Fenster 35. Das Gehäuse ist in Richtung der Schieberbewegung dadurch versteift, daß die Streben zwischen Deck- und Bodenwandung als Doppelträger ausgeführt sind, wie in Fig. 6 erkennbar. Die Gehäuseteile können miteinander verschweißt sein, oder man kann eine Schnappverbindung vorsehen.

Das Fenster weist rings um seine Hauptfläche einen schmalen, nach außen etwas vorstehenden Rand 66 auf, so daß es gegenüber dem ihn umgebenden Rahmen etwas vorsteht. Eine zur Kontur dieses Randes komplementäre Eintiefung ist auf der Außenseite der gegenüberliegenden Bodenwandung mit 67 bezeichnet und erlaubt das Übereinanderstapeln mehrerer Gehäuse.

Beim Herausziehen des Schiebers aus dem Gehäuse wird dieser mit einer Hand an Ober- und Unterplatte des Griffstücks erfaßt, während die andere Hand das Gehäuse hält. An den frontseitigen - also dem Separatorsteg abgewandten - Kanten der auf den Federarmenden liegenden Fotos greifen die Haken 22 an, wodurch eine gewisse Anzahl von Fotos - je nach der Höhe der Haken - der Trenneinrichtung zugeführt wird. Diese stellt sich letztlich als ein Durchlaßspalt dar, der einerseits von (im Ausführungsbeispiel) zwei an den Gehäuseboden innen angeformten Stufen 68, andererseits von der ihnen zugewandten Unterseite von Schuhen 69 begrenzt wird, die in den Separatorsteg eingesetzt sind und die in Fig. 7 im Schnitt und in Fig. 8 in Frontansicht erkennbar sind.

Zu jeder Stufe 68 gehört ein Schuh 69, und jedes System Stufe/Schuh ist beidseits der Symmetrieebene 70 der Vorrichtung angeordnet. Die Schuhe sind im Separatorsteg längsgeführt, mit einem Schneidenlager abgestützt und von einer eingelegten Drahtfeder 71 vorgespannt. In jedem Schuh ist außerdem ein Röllchen um eine zur Auszugsrichtung senkrechte Achse drehbar aufgenommen, und das Röllchen 28 ragt etwas aus dem Schuh heraus.

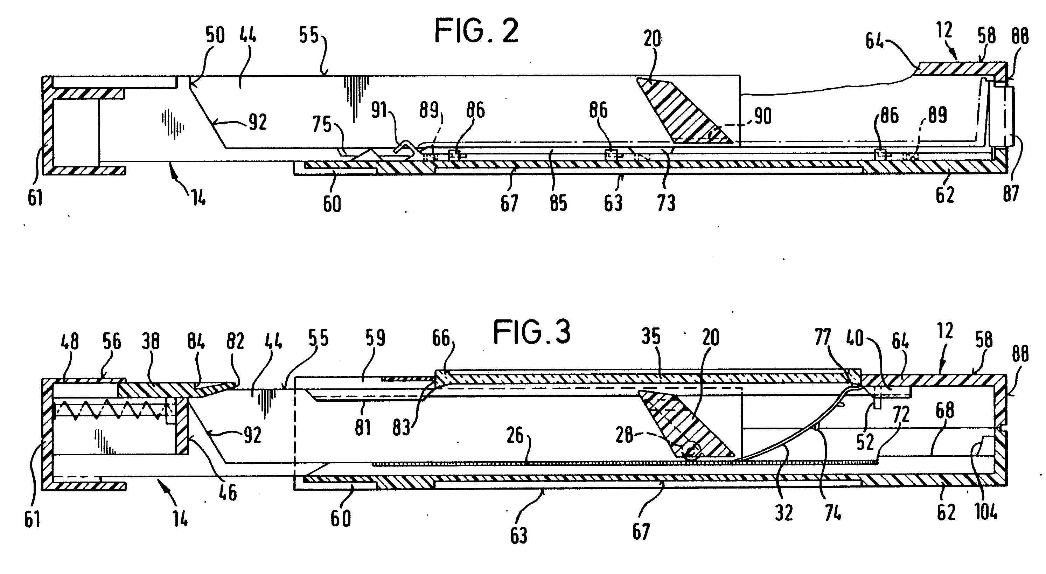

In Fig. 3 erkennt man die Lage der Stufen 68, die um reichlich die Dicke eines Fotoabzugs weiter über das Gehäusebodenniveau hinaussteht als die Oberfläche des Haftbelages 26. In der Ruhestellung des Schiebers liegt der unterste Abschnitt der Schuhe ein Stück weiter von der Kante 72 der Stufe entfernt, und die dem Stapel zugekehrte Fläche des Separatorstegs ist keilartig abgeschrägt derart, daß bei Auflaufen des Separators auf die Stapelkante die Fotos, an deren gegenüberliegender Kante die Haken 22 angreifen, längs der Schräge abwärts "wandern", in Richtung auf die ihnen zugekehrte Kante 72 der Stufen. Nur gerade die führende Kante eines einzigen Fotos hat zwischen den Schuhen 69 und den Haftbelag 26 soviel Platz, daß dieses im Stapel unterste Foto in den sich bildenden Spalt zwischen Schuhen 69 und Haftbelägen 26 eintreten kann, solange dieser Spalt von der Stufe 68 offengehalten wird. Alle anderen, vom Haken 22 mitgeführten Fotos stoßen an den Separator selbst oder an dessen Schuhe an mit der Folge, daß die Haken von deren Endkante abrutschen.

Wenn die in Auszugsrichtung hinteren Kanten der Schuhe 69 die Kante 72 der Stufen 68 passiert haben, senken sich die Schuhe unter der Wirkung der Drahtfeder 71, wobei die Rollen 28 sich auf das so abgetrennte einzelne Foto setzen und dieses auf die zugeordneten Haftbeläge pressen, wodurch es im Gehäuse - also dem ersten Rahmenteil - festgehalten wird. Der Reststapel wird vom Separator zusammen mit dem Schieber nach außen mitgenommen, bis dieser ganz ausgezogen ist.

Dabei ist zu beachten, daß die Federarme 32 ja auch vom Separatorsteg überlaufen werden. Damit sie während des Durchlaufs ihrer am Stapel angreifenden Enden nicht das abgetrennte Bild von unten belasten, werden sie während einer bestimmten Phase des Auszugshubes mechanisch in Richtung Gehäuseboden gedrückt. Hierzu dienen an die Schieberholme 44 angeformte Kufen 73, die seitlich von den Federarmen auskragende Ansätze 74 überstreichen und die Arme entsprechend ihrer Länge auf einem Teilhub halten. Weitere Kufen 75 an den Schieberholmen laufen auf die Federarme 24 an der Verbreiterung 76 auf, sobald das Einzelfoto zwischen Haftbelag und Rollen sicher geklemmt ist, und drücken diese Arme ebenfalls vom Sichtfenster weg, so daß man ungehindert weitere Fotos einfüllen, andere entnehmen kann.

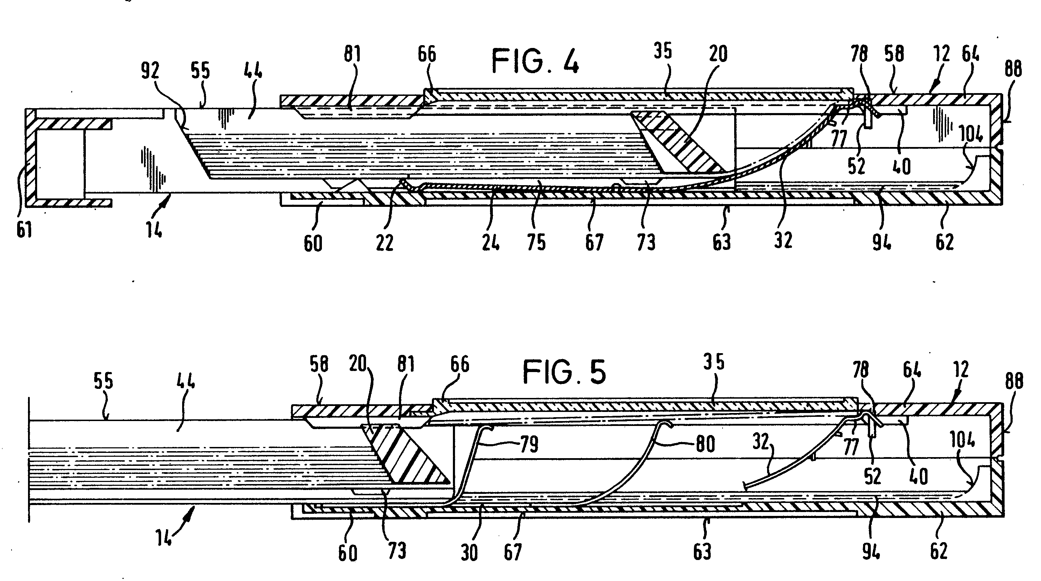

Auf der dem Stapel abgewandten Seite des Separators werden die Federarme 32 nach kurzem Hub wieder freigegeben, so daß sie wieder unter das vereinzelte Foto greifen und dessen hintere Kante allmählich in Richtung Fenster führen Schließlich legt sich diese Kante unter der Wirkung der Federn an die Gehäuseoberseite an. Da die freien Enden der Federarme abgerundet sind, andererseits aber diese Kante sicher an der erreichten Position festgeklemmt werden soll, ist an den Federarmen noch ein kurzes Stück geradlinig ausgebildet, in Fig. 4 mit 77 bezeichnet. Das abgerundete Federarmende findet dabei Platz in einer Ausnehmung auf der Innenseite der Gehäusedeckwand, in Fig. 5 mit 78 bezeichnet.

Die beiden Haken 22, die beiden Schuhe 69, die Haftbeläge 26 und die Federarme 32 sind sämtlich jeweils symmetrisch bezüglich der Mittelebene der Gesamtvorrichtung angeordnet, und die beiden Haken 22 liegen so genau wie möglich auf einer zu dieser Symmetrieebene senkrechten Linie. Das hat zur Folge, daß das zu wechselnde Foto auch dann ohne Verdrehung den Wechselvorgang durchläuft, wenn es wegen Untermaß nicht an den Schieberholmen geführt ist. Die Abmessungstoleranzen von Fotos sind nämlich bei gleicher Nenngröße unterschiedlich in Quer- und Längsrichtung: Da in den Entwicklungsanstalten die Papiere von Rollen recht genau eingehaltener Breite verarbeitet werden, die dann auf unterschiedliche Länge geschnitten werden, ist es bevorzugt, in Richtung der Schieberbewegung das Fotomaß vorzusehen, das enger toleriert ist.

Das abgetrennte Einzelbild, das bis jetzt nur an seiner einen Kante eingeklemmt gehalten beschrieben worden ist, wird als ganzes in Richtung Fenster gehoben. Hierzu dienen die schon erwähnten Blattfedern 30 mit frontseitigen Armen 79 und rückseitigen Armen 80, die -wie in Fig. 5. deutlich erkennbar - das Einzelfoto so halten und abstützen, daß es beim Schieberrückhub wieder auf den Stapel gelangen kann. Im geschlossenen Zustand der Vorrichtung und während des Auszugshubes des Schiebers - zumindest während des ersten Teils desselben - sind die Federarme 79, 80 von den Holmen des Schiebers in entsprechende Nuten des Gehäusebodens gedrückt, die in Fig. 6 erkennbar sind.

Zu Beginn des Rückhubs des Schiebers ist das Einzelfoto von den Federarmen 32 vor den an das Gehäuse angeformten Anschlägen 52 eingeklemmt und wird in Richtung Separatorsteg an vier Stellen von den Federarmen 79, 80 abgestützt. Die dem Separatorsteg zugekehrte andere Querkante des Fotos kann nach unten durchhängen; die ihr zugekehrte Seite des Separators ist jedoch keilförmig abgeschrägt, so daß die Kante allmählich gehoben wird, wenn der Separatorsteg auf sie zuläuft. Zwischen der Oberkante des Separatorstegs und der Gehäusedeckwand ist ein Spalt, der für den Durchlaß des Fotos reichlich bemessen ist. Der Gefahr, daß das Foto auf die ihm zugekehrt liegenden Kanten des vom Schieber mitgeführten Reststapels aufstößt, wird dadurch begegnet, daß die Gehäusedeckwand innen Niederhaltenocken 81 aufweist, die den Stapel unter dem Niveau der Separatoroberseite halten. Diese Niederhaltenokken stehen ausgefluchtet mit den Rippen 40, so daß sie durch die entsprechenden Ausschnitte 42, 54 des Separatorsteges passen.

Das Griffstück-Schiebeteil 38 ist gleitbeweglich im Griffstück aufgenommen und steht unter Federvorspannung in Richtung Gehäuse, wie in Fig. 3 gut erkennbar. Beim Einschub des Schiebers trifft seine freie Kante 82 auf einen im Gehäuse vorgesehenen Anschlag 83, wodurch er in das Griffstück zurückgedrückt wird und nicht in den durch das Gehäusefenster sichtbaren Raum ragt. Nach dem Herausziehen hingegen sichert er die im Schieber liegenden Fotos gegen Herausfallen. Zum Wechseln der Fotos kann er von Hand zurückgedrückt werden, was durch Fingerkante 84 erleichtert wird. Man kann die Fotos von der Unterseite des Schiebers her, zwischen die Holme greifend, herausdrücken oder neben dem Griffstück von oben hineinfassen.

Die oben beschriebene und dargestellte Ausbildung des Federsystems, gebildet von den einstückig geschnittenen und paarweise symmetrisch angeordneten Federn mit den Federarmen 24 und 32, erfüllt insgesamt fünf Funktionen. Erstens bilden die an ihnen angeformten Haken 22 die Zufuhreinrichtung, wobei die Haken letztlich nur ein Blatt in die Trenneinrichtung mitnehmen. Zweitens bilden beide Arme gemeinsam - genauer gesagt, die vier Arme beider Federn - ein Andrucksystem, mit dem der Stapel bei ruhender Vorrichtung sauber gegen das Fenster gedrückt wird. Drittens dient der Arm 32 dazu, nachdem er vom Separator überlaufen worden ist, das Einzelblatt an die Gehäusedeckwand zu fördern und es dort, viertens, festzuklemmen. Fünftens schließlich sind die Arme 32 dicht genug neben den Haftbelägen 26 angeordnet, daß sie ein gegebenenfalls infolge statischer Aufladung am Haftbelag anhaftendes Einzelblatt infolge ihrer Vorspannkraft von diesem abschälen können. Anzumerken ist, daß der Arm 32 so geformt und angeordnet ist, daß er vom Separatorsteg überlaufen werden kann, ohne daß es zu einer Störung der glatten Handhabung führt.

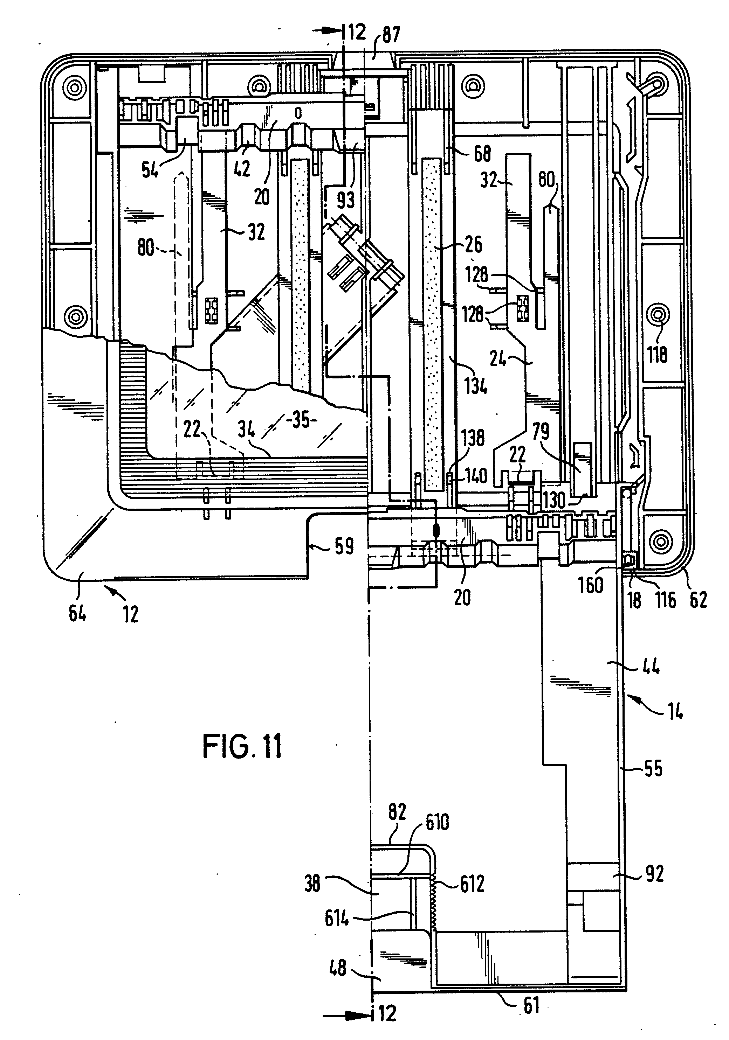

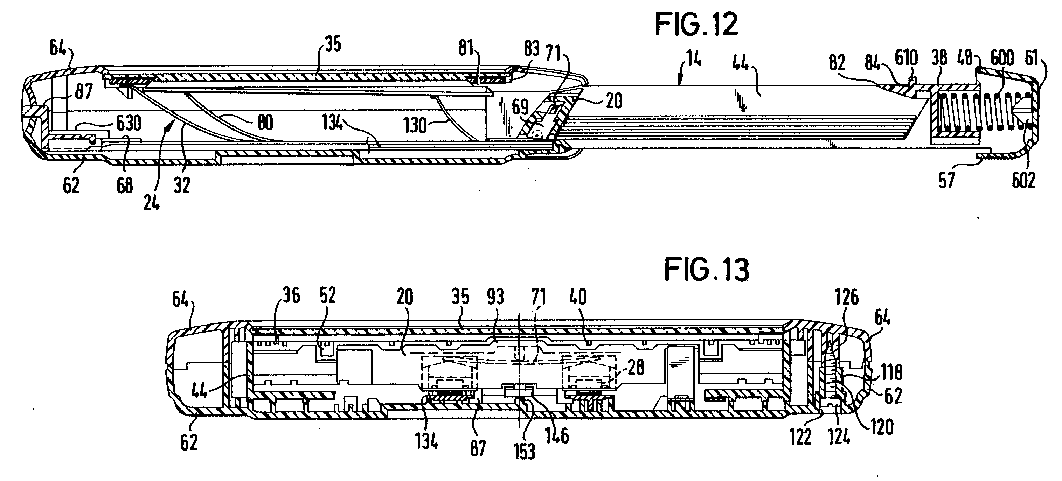

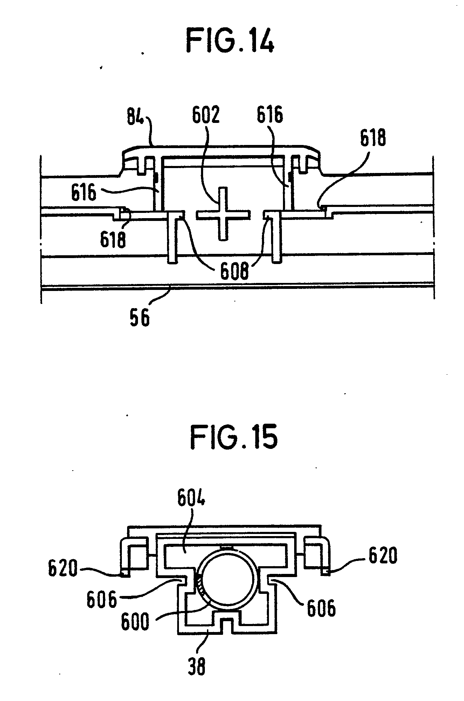

In den Fig. 11 bis 15 ist ein weiteres Ausführungsbeispiel eines Bildwechslers dargestellt. Im Gehäuse 12 ist der Schieber 14 verschieblich aufgenommen; Gehäuse 12 bildet das erste Rahmenteil, Schieber 14 das zweite. Der Auszugshub ist durch ein an einen der Schieberholme 44 angeformtes Lagerauge 116, das auf einen gehäuseseitigen Anschlag 18 aufläuft, begrenzt. Das Gehäuse ist aus einer Oberschale 64 und einer Unterschale 62, deren Außenränder formschlüssig ineinandergreifen, zusammengeschraubt, und zwar in dem Bereich zwischen den Schieberholmen 44 und den zu ihnen parallelen Außenkanten des Gehäuses. Hierfür weist jeweils die Unterschale angeformte Führungshülsen 118 für Schraubenschäfte 120 sowie außenseitige Einsenkungen 112 für Schraubenköpfe 124 auf, während die Oberschale dazu koaxial angeformte Kernloch-Hülsen 126 trägt, in die die Schrauben ihr Gewinde selbst schneiden. In die Oberschale 64 ist das Fenster 35 eingeklipst, und die unter seinen äußeren Randbereichen liegenden Teile der Oberschale sind dadurch nicht sichtbar, daß diese Bereiche des Fensters mattiert sind. In Fig. 11 ist die Kontur des mittleren, transparenten Fensterabschnitts mit 34 markiert.

Funktionell bestehen wenig Unterschiede gegenüber dem Ausführungsbeispiel nach Fig. 1 bis 10, so daß es genügt, nur die markanten Abweichungen zu erläutern.

Hier sind die Federarme 24, 32 und 80 zu einem Stanz- und Biegeteil zusammengefaßt und mittels Nocken 128 positioniert und kalt festgebördelt. Dagegen sind die Federarme 79 gesonderte Bauteile, die mittels angeformter Nocken an der Unterschale positioniert und kalt festgebördelt werden. Damit dieser Federarm das vereinzelte Bild möglichst frühzeitig hochheben kann, weist der zugehörige Schieberholm 44 Ausschnitte 130 auf. Das sichere Festhalten des vereinzelten Bildes ist während dieser Phase des Wechselzyklus durch die Federarme 80 gewährleistet, die die dem Schieber abgewandte Endkante des Bildes klammerartig nach oben drücken.

Die beiden Haftbelagstreifen 26 sind auf je einem gesondert gefertigten Steg 134 angeordnet. Beidseits des Streifens 26 kann gegebenenfalls der Steg 134 angeformte Federbrücken aufweisen, die nach Überlaufen durch den Separatorsteg 20 nach oben ausfedern und die Bildkante liften, oder man kann gesonderte metallische Federblätter vorsehen.

Die Stege 134 sind spiegelsymmetrisch gestaltet, so daß sie also an beiden Enden Stufen 68 mit Kanten 72 aufweisen. Der Grund liegt darin, daß dann beim automatischen Beschichten der Stege mit dem Haftbelag kein Sortieren erforderlich ist. Allerdings sind dann zusätzlich Löcher 138 vorzusehen, durch die am griffseitigen Ende des Gehäuses an dessen Unterschale angeformte Auffahrkeile 140 für den Separatorsteg ragen. Die Befestigung der Stege in der Unterschale erfolgt durch Eindrücken von Nasen in entsprechende Rinnen der Gehäuseunterschale, und die genaue Positionierung erfolgt mittels eines der beiden Zapfen, nämlich mittels des dem Schiebergriff abgewandten Zapfens, während dem anderen Zapfen ein gehäuseseitiges Langloch zugeordnet ist.

Eine Druckfeder 600 drückt das als Niederhalter dienende Griffstück-Schiebeteil 38 über den Bilderstapel. Die Aufnahme der Druckfeder 600 wird auf Seiten des Schiebers 14 durch einen Kreuzzapfen 602 und auf Seiten des Griffstück-Schiebeteils 38 durch dessen Hohlkammer 604 gewährleistet. Die Führung des Griffstück-Schiebeteils 38 wird durch dessen Nuten 606, die Rippen 608 aufnehmen, vorgenommen. Das Griffstück-Schiebeteil 38 kann sowohl an einer an seiner Oberseite befindlichen Rippe 610 als auch an seiner seitlichen Riffelung 612 zurückgezogen werden. Zwei Schlitze 614 im Griffstück-Schiebeteil 38 nehmen Führungsrippen 616 am Griffstück 48 auf. Die Hubbegrenzung erfolgt durch miteinander in Eingriff bringbare Anschläge 618, 620 am Griffstück 48 bzw. am Griffstück-Schiebeteil 38.

Im ausgezogenen Zustand des Schiebers 14 ist das Griffstück-Schiebeteil 38 maximal in Richtung auf den Bilderstapel ausgefahren, so daß dieser gegen Herausfallen gesichert wird. In dieser Position kann das Griffstück-Schiebeteil 38 von oben oder seitlich ergriffen werden, um das Griffstück-Schiebeteil 38 soweit in Richtung auf das Griffstück 48 zurückzuziehen, daß der Bilderstapel freiliegt. Wird der Schieber 14 in das Gehäuse 12 zurückgeschoben, stößt die Rippe 610 gegen den Anschlag 83, bevor der Schieber 14 gänzlich in das Gehäuse 12 eingeschoben ist. Durch das gänzliche Einschieben des Schiebers 14 wird das Griffstück-Schiebeteil 38 in eine mittlere zurückgezogene Position gebracht, in der sich seine freie Kante 82 im Bereich der Niederhaltenocken 81 und daher nicht in dem durch das Fenster 35 sichtbaren Bereich befindet. In dieser Stellung befindet sich der Endbereich des Griffstück-Schiebeteils 38 benachbart seiner freien Kante gerade soweit über dem Bilderstapel, daß das Griffstück-Schiebeteil auch im eingeschobenem Zustand des Schiebers 14 seine Niederhaltefunktion zusätzlich zu den Niederhaltenocken 81 ausüben kann, um das oberste Bild des Stapels im Abstand zum Fenster 35 zu halten.

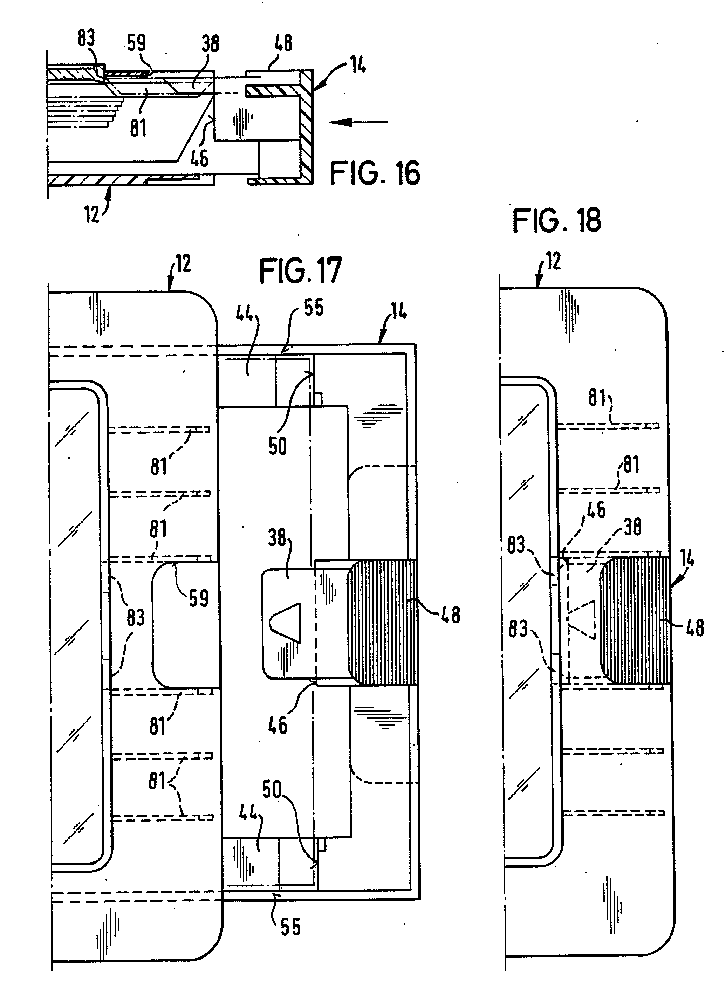

Fig. 16 bis 18 zeigen das Griffstück-Schiebeteil 38 im Zusammenwirken mit dem Gehäuse 12, wobei Fig. 17 der Lage gemäß Fig. 1 entspricht, wobei das Griffstück-Schiebeteil 38 seine äußere Endstellung einnimmt. Wird jetzt der Schieber 14 eingeschoben, stößt des Griffstück-Schiebeteil 38 auf den kantenförmigen Anschlag 83 und wird hierdurch etwas in bezug auf das Griffstück 48 eingeschoben. Zur Entnahme des Bilderstapels kann es noch weiter bis zur Freigabe des Stapels manuell zurückgeschoben werden.

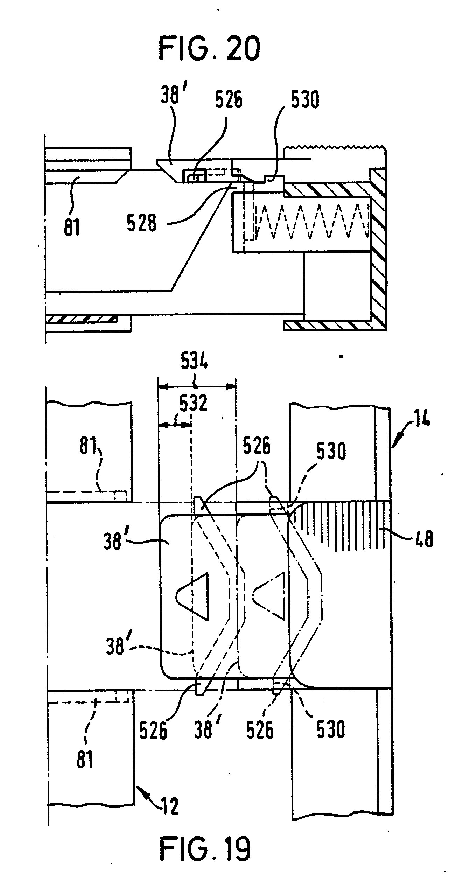

Fig. 19, 20 zeigen eine Ausführungsform eines Griffstück-Schiebeteils 38, das sich in seiner bezüglich des Griffstücks 48 innersten Position selbsttätig verriegelt. Hierfür sind am Griffstück-Schiebeteil 38 zwei Federarme 526 angelenkt, die während des normalen Wechselbetriebes zwar einwärts ausgelenkt werden, sich dabei aber in Führungen 528 noch nicht verriegeln können. Erst wenn das Griffstück-Schiebeteil 38 ganz eingedrückt wird, erfolgt die Verriegelung an einer Stufe 530. Wird dann der Schieber 14 erneut ins Gehäuse 12 eingefahren, so stoßen die Federarme 526 auf die Rippen 81 und werden dadurch ausgelöst.

Dei Pfeile 532 bzw. 534 verdeutlichen die teileingeschobene bzw. ganz eingeschobene Position des Griffstück-Schiebeteils 38.

## Ansprüche

1. Behälter für einen Stapel von gleichformatigen rechteckigen Blättern mit einem Gehäuse (12), das mit einem an das Blattformat angepaßten Sichtfenster (35) für das oberste Blatt des Stapels versehen ist, und mit einem parallel zur Fensterebene aus dem Gehäuse herausziehbaren und wieder einschiebbaren Schieber (14) zur Entnahme mindestens eines Blattes aus dem Gehäuse, der im Bereich seiner Stirnwand (61) einen beweglichen, das mindestens eine Blatt übergreifenden Niederhalter (38) aufweist, **dadurch gekennzeichnet,** daß der Behälter Mittel (600, 81) aufweist, die bei jeder Hinundherbewegung des Schiebers den Niederhalter zwischen der das mindestens eine Blatt übergreifenden Position in der herausgezogenen Schieberendlage und einer Position außerhalb des vom Sichtfenster exponierten Bereichs des unter dem Sichtfenster liegenden Blatts in der eingeschobenen Schieberendlage verlagern.

2. Behälter nach Anspruch 1, dadurch gekennzeichnet, daß der Niederhalter in Richtung der Schieberbewegung verlagerbar ist.

3. Behälter nach Anspruch 2, dadurch gekennzeichnet, daß der Niederhalter (38) parallel zu der Fensterebene verlagerbar ist.

4. Behälter nach einem der vorangehenden Ansprüche, dadurch gekennzeichnet, daß der Niederhalter (38) den mittleren Bereich der Blattquerkante übergreifend ausgebildet und angeordnet ist.

5. Behälter nach einem der vorangehenden Ansprüche, dadurch gekennzeichnet, daß die Mittel eine Feder (600) umfassen, die den Niederhalter (38) in eine Endlage vorspannt.

6. Behälter nach einem der vorangehenden Ansprüche, dadurch gekennzeichnet, daß die Mittel Anschläge (81) umfassen, auf die der Niederhalter (38) aufläuft.

7. Behälter nach Anspruch 6, dadurch gekennzeichnet, daß die Anschläge (81) am Gehäuse ausgebildet sind.

8. Behälter nach Ansprüchen 5 und 6, dadurch gekennzeichnet, daß die Anschläge (83) eine Position des Niederhalters definieren, die zwischen der blattübergreifenden und der Blattfreigabeposition liegt.

9. Behälter nach Anspruch 8, dadurch gekennzeichnet, daß der Niederhalter (38) in der Zwischenposition die Blattquerkante gerade noch übergreift.

10. Behälter nach einem der vorangehenden Ansprüche, dadurch gekennzeichnet, daß der Niederhalter (38) mit seiner dem Blatt zugekehrten Seite eine Ebene definiert, die im Abstand von Innenseite des Sichtfensters (35) liegt.

11. Behälter nach Anspruch 10, dadurch gekennzeichnet, daß das Gehäuse (12) einwärts einspringende Rippen (81) aufweist, die bei eingeschobenem Schieber (14) dieselbe Querkante des Blattes übergreifen wie der Niederhalter (38) und mindestens denselben Abstand von der Innenseite des Sichtfensters (35) definieren wie jener.

12. Behälter nach einem der vorangehenden Ansprüche, dadurch gekennzeichnet, daß das Sichtfenster (35) eine zu der Schieberstirnwand (61) im wesentlichen parallele Endkante im Abstand von der Gehäusekontur aufweist und daß der Schieber (14) Blattanschläge (50) im Abstand von seiner Stirnwand aufweist, die bei eingeschobenem Schieber zumindest das dem Fenster zugekehrte Blatt bezüglich desselben ausrichten.

13. Behälter nach Anspruch 12, dadurch gekennzeichnet, daß der Niederhalter (38) in dem Bereich des Schiebers (14) zwischen dessen Stirnwand (61) und den Blattanschlägen (50) angeordnet ist.

14. Behälter nach Anspruch 13, dadurch gekennzeichnet, daß der Niederhalter (38) in diesem Schieberbereich gleitbeweglich geführt ist.

15. Behälter nach Anspruch 5 und einem der Ansprüche 13 oder 14, dadurch gekennzeichnet, daß eine Aussparung für die Feder (600) in diesem Schieberbereich ausgebildet ist.

16. Behälter nach Anspruch 15, dadurch gekennzeichnet, daß die Feder (600) symmetrisch bezüglich der Niederhalterführungen (46) auf den Niederhalter (38) wirkend angeordnet ist.

17. Behälter nach einem der Ansprüche 13-16, dadurch gekennzeichnet, daß der Niederhalter (38) in Richtung der Schieberbewegung eine Abmessung aufweist, die höchstens dem Abstand zwischen der Schieberstirnwand (61) und den Blattanschlägen (50) in derselben Richtung entspricht.

18. Behälter nach einem der Ansprüche 12-17, dadurch gekennzeichnet, daß der Schieber in dem Bereich zwischen seiner Frontwand (61) und den Blattanschlägen (50) eine Griffpartie aufweist.

19. Behälter nach Anspruch 18 und einem der Ansprüche 13-17, dadurch gekennzeichnet, daß der Niederhalter (38) und die Griffpartie in Richtung quer zur Schieberbewegung versetzt angeordnet sind.

120. Behälter nach Anspruch 19, dadurch gekennzeichnet, daß die Griffpartie eine fensterseitige (56) und eine dieser gegenüberliegende Griffplatte (57) umfaßt und der Niederhalter (38) und seine Führung zwischen beiden Griffplatten angeordnet sind.

21. Behälter nach einem der vorangehenden Ansprüche, dadurch gekennzeichnet, daß der Niederhalter (38) bei eingeschobenem Schieber zumindest teilweise von einer Gehäusewandung (58) überdeckt ist.

22. Behälter nach einem der vorangehenden Ansprüche, dadurch gekennzeichnet, daß der Niederhalter (38) quer zu seiner Bewegungsrichtung verlaufende Fingereingriffskanten (84) aufweist.

23. Behälter nach einem der vorangehenden Ansprüche, dadurch gekennzeichnet, daß der Niederhalter für manuelle Betätigung seitlich zugänglich ist.

24. Behälter nach Anspruch 14, dadurch gekennzeichnet, daß der Niederhalter (38) mittels angeformter Nuten und Rippen (606, 608) geführt ist.

25. Behälter nach einem der vorangehenden Ansprüche, dadurch gekennzeichnet, daß die freie Kante des Niederhalters (38) keilartig auf die Kante des mindestens einen Blattes auflaufend gestaltet ist.

26. Behälter nach einem der vorangehenden Ansprüche, dadurch gekennzeichnet, daß der Niederhalter (38) in der Blattfreigabesposition verriegelbar ist.

27. Behälter nach Anspruch 26, dadurch gekennzeichnet, daß der Niederhalter (38) durch Einschieben des Schiebers (14) in das Gehäuse (12) entriegelbar ist.

28. Behälter nach Anspruch 27, dadurch gekennzeichnet, daß der Niederhalter (38) seitlich ausgestellte Federarme (526) zum Verriegeln aufweist, die durch Auflaufen auf gehäuseseitige Steuerflächen (81) in eine Entriegelungsposition verformbar sind.

29. Behälter nach einem der vorangehenden Ansprüche, gekennzeichnet durch eine Blattwechselmechanik für das zyklische Umschichten des Stapels mittels Herausziehen und Wiedereinschieben des Schiebers (14) in das Gehäuse (12).

30. Behälter nach Anspruch 29, dadurch gekennzeichnet, daß beim Herausziehen des Schiebers (14) aus dem Gehäuse (12) ein Blatt des Stapels im Gehäuse zurückbleibt, während der Schieber den Reststapel heraustransportiert, und daß das zurückgebliebene Blatt auf die andere Stapelseite verlagert wird.

31. Behälter nach Anspruch 5, dadurch gekennzeichnet, daß der Niederhalter (38) in seine blattübergreifende Position federvorgespannt ist und in der eingeschobenen Schieberendlage gegen die Federvorspannung verlagert ist, und daß Bremsmittel vorgesehen sind zum Halten des Schiebers in der eingeschobenen Endlage gegen die Federvorspannung.

FIG. 6

FIG. 1

FIG.2

FIG.3

FIG. 4

FIG. 5

EP 0 315 733 A1

FIG. 7

FIG. 8

FIG. 9

FIG. 10

FIG. 11

FIG.12

FIG.13

# FIG.14

# FIG.15

FIG. 16

FIG. 18

FIG.17

# FIG. 20

# FIG. 19

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 912 643  (LICINVEST AG)<br>* Seite 32, Zeilen 18-28; Figur 45 *<br><br>-----  | 1-4,18,<br>22,29,<br>30 | G 03 B  23/02 |
| | | | **RECHERCHIERTE SACHGEBIETE (Int. Cl.4)**<br><br>G 03 B  23/02<br>G 09 F  11/30<br>B 42 F   7/14<br>G 02 B  27/02 |

Der vorliegende Recherchenbericht wurde für alle Patentansprüche erstellt

| Recherchenort | Abschlußdatum der Recherche | Prüfer |
|---|---|---|
| DEN HAAG | 21-02-1989 | BOEYKENS J.W. |